# EUROPÄISCHE PATENTSCHRIFT

(11) **EP 3 908 515 B1**
(45) Veröffentlichungstag und Bekanntmachung des Hinweises auf die Patenterteilung: **09.11.2022**
(21) Anmeldenummer: 20712447.0
(22) Anmeldetag: 03.03.2020
(51) Int. Cl.: B63H 21/20, H02J 1/10, H02J 7/14, H02P 9/02

(54) **ENERGIEVERSORGUNGSEINRICHTUNG**
POWER SUPPLY DEVICE
DISPOSITIF D'ALIMENTATION EN ÉNERGIE

(30) Priorität: 29.05.2019 DE 102019207931
(43) Veröffentlichungstag der Anmeldung: 17.11.2021
(73) Patentinhaber: Siemens Energy Global GmbH & Co. KG, 81739 München (DE)
(72) Erfinder: TIGGES, Kay, 24257 Hohenfelde (DE)
(86) Internationale Anmeldenummer: PCT/EP2020/055576
(87) Internationale Veröffentlichungsnummer: WO 2020/239277

(56) Entgegenhaltungen:
- DE-A1- 10 353 967
- DE-A1-102009 015 837
- DE-C- 883 214

## Beschreibung

Die Erfindung wird durch die Merkmale der unabhängigen Ansprüche definiert.

Zweitakt-Dieselmotoren sowie auch Energieversorgungseinrichtungen zum Bereitstellen von elektrischer Energie sind im Stand der Technik umfänglich bekannt, so dass es eines gesonderten druckschriftlichen Nachweises hierfür nicht bedarf. Energieversorgungseinrichtungen der gattungsgemäßen Art dienen insbesondere dazu, elektrische Energie für einen bestimmungsgemäßen Betrieb von elektrischen Verbrauchern, die an der Energieversorgungseinrichtung angeschlossen sind, bereitzustellen. Die Energieversorgungseinrichtung kann zu diesem Zweck an einem Energieversorgungsnetz angeschlossen sein, an dem auch weitere Energieversorgungseinrichtungen und elektrische Verbraucher angeschlossen sein können. Das Energieversorgungsnetz kann somit auch der Verteilung von elektrischer Energie dienen.

Zum Bereitstellen der elektrischen Energie ist es bekannt, dass die Energieversorgungseinrichtung eine Verbrennungskraftmaschine umfasst, die mit einer rotierenden elektrischen Maschine mechanisch gekoppelt ist. Die rotierende elektrische Maschine dient dazu, die an einer Kurbelwelle der Verbrennungskraftmaschine bereitgestellte mechanische Energie in elektrische Energie umzuformen, sodass die Energieversorgungseinrichtung, die die Verbrennungskraftmaschine und die rotierende elektrische Maschine umfasst, in gewünschter Weise elektrische Energie bereitzustellen vermag. Mit einem Energieerzeugungs-, Verteilungs- und Bordstromversorgungssystem für emissionsarme Überwasser-Marine (Navy)-Schiffe unterschiedlicher Klassen und Größen befasst sich die DE 103 53 967 A1.

Eine besondere Situation für gattungsgemäße Energieversorgungseinrichtungen ergibt sich, wenn als Verbrennungskraftmaschine ein Zweitakt-Dieselmotor eingesetzt werden soll. Die Nutzung von Zweitakt-Dieselmotoren ist insbesondere im Bereich von Schiffsantrieben weit verbreitet. Zweitakt-Dieselmotorensind Verbrennungskraftmaschinen, mit denen ein großer Wirkungsgrad in Bezug auf eine Brennstoffnutzung erreicht werden kann. Darüber hinaus sind sie vergleichsweise wartungsarm und zuverlässig im bestimmungsgemäßen Betrieb gegenüber anderen Verbrennungskraftmaschinen.

Zweitakt-Dieselmotoren sind in der Regel als Zweitakt-Großdieselmotoren ausgebildet und häufig für einen Leistungsbereich von zum Beispiel etwa 6 MW bis etwa 80 MW konstruiert. Bei Schiffsantrieben dienen die Zweitakt-Dieselmotoren dazu, Propeller von Schiffsantrieben anzutreiben, und zwar vorzugsweise unmittelbar anzutreiben.

Der Zweitakt-Dieselmotor ist ein nach dem Zweitakt-Prinzip arbeitender Dieselmotor. Die Funktion des Zweitakt-Dieselmotors wird als bekannt vorausgesetzt, weshalb vorliegend von weiteren detaillierten Ausführungen in Bezug auf dessen Funktion abgesehen wird.

Der Einsatz von Zweitakt-Dieselmotoren, insbesondere bei Schiffsantrieben, hat sich bewährt, zumal die Zweitakt-Dieselmotoren den besonders hohen Wirkungsgrad erreichen können. Zweitakt-Dieselmotoren sind in der Regel als langsam laufende Motoren ausgebildet. Sie sind üblicherweise als Reihenmotoren. Im bestimmungsgemäßen Betrieb werden derartige Zweitakt-Dieselmotoren häufig mit einer Drehzahl in einem Bereich von etwa 60 bis etwa 120 Umdrehungen pro Minute, vorzugsweise in einem Bereich von etwa 80 bis etwa 100 Umdrehungen pro Minute betrieben. Typische Maße von Bohrungen von Zylindern solcher Zweitakt-Dieselmotoren reichen von einigen Dezimetern bis zu etwa 1 m oder mehr. Ein Zylinderhub kann zum Beispiel in einem Bereich von einigen Dezimetern bis zu etwa 3,5 m, vorzugsweise in einem Bereich von etwa 50 cm bis zu etwa 1 m liegen.

Ein Antrieb mit vielzylindrigen Kolbenmaschinen, insbesondere ein Schiffsantrieb mit vielzylindrigen Zweitaktdieselmotoren, ist beispielsweise in der DE 883 214 C offenbart.

Die Nutzung von Zweitakt-Dieselmotoren zur Erzeugung von elektrischer Energie ist derzeit nur sehr begrenzt vorgesehen. Obwohl Zweitakt-Großdieselmotoren einen deutlich besseren Wirkungsgrad als beispielsweise Viertakt-Dieselmotoren haben, sind Zweitakt-Dieselmotoren bislang aufgrund physikalischer Umstände kaum für die Nutzung der Erzeugung elektrischer Energie in Betracht gezogen worden. Ein wichtiger Grund ist, dass - anders als bei Nutzung des Zweitakt-Dieselmotors zum Antrieb eines Propellers eines Wasserfahrzeugs - die elektrische Maschine kein geeignetes Trägheitsmoment zur Drehzahlstabilisierung und damit auch als Überdrehzahlschutz bereitzustellen vermag. Darüber hinaus erweist es sich als ungünstig, dass Zweitakt-Dieselmotoren im bestimmungsgemäßen Betrieb in der Regel bei Drehzahlen betrieben werden, die üblicherweise kleiner als etwa 100 Umdrehungen pro Minute sind. Daraus resultiert, dass die rotierende elektrische Maschine eine hohe Polzahl benötigt, wodurch eine bauliche Umsetzung der rotierenden elektrischen Maschine und damit der Energieversorgungseinrichtung insgesamt ungünstig werden würde. Nicht zuletzt erweisen sich Drehmomentschwankungen bedingt durch die vergleichsweise kleine Drehzahl und die Zündfolgen als ungünstig, die zu großen Schwankungen bei einer Generatorfrequenz führen können und infolgedessen ungünstige Auswirkungen auf einen entsprechenden Stromverlauf eines elektrischen Stroms nach sich ziehen können.

Bei Nutzung einer Energieversorgungseinrichtung, die einen Zweitakt-Dieselmotor im Bereich von Wasserfahrzeugen umfasst, ist eine Lösung der vorgenannten Probleme nicht bekannt. Bei landgestützten Energieversorgungseinrichtungen gattungsgemäßer Art werden große massereiche Schwungräder eingesetzt, um Drehzahlschwankungen des Zweitakt-Dieselmotors zu reduzieren. Diese Lösung ist jedoch sehr aufwendig und für Fahrzeuge jeglicher Art ungeeignet.

Als besonders kritisch erweist es sich, wenn die rotierende elektrische Maschine und/oder deren elektrische Kopplung mit dem Energieversorgungsnetz, welches vorzugsweise ein Gleichspannungsnetz ist, plötzlich ausfällt. Aufgrund des großen Hubraums sowie der niedrigen Drehzahl kann dann nämlich das Problem auftreten, dass ein bereits mit Brennstoff gefüllter Zylinder zündet und seine Energie freisetzt, die freigesetzte Energie jedoch nicht durch die rotierende elektrische Maschine aufgenommen werden kann. Bei den hierbei umgesetzten großen Energiemengen kann eine erhebliche Beschädigung zumindest des Zweitakt-Dieselmotors die Folge sein.

Darüber hinaus kann in sehr kurzer Zeit eine zulässige maximale Drehzahl der Kurbelwelle überschritten werden, sodass der Zweitakt-Dieselmotor den Bereich der Überdrehzahl erreicht. Hier kann eine nachhaltige Schädigung des Zweitakt-Dieselmotors die Folge sein. Bei den hier behandelten Großmaschinen ist dies nicht nur außerordentlich gefährlich, sondern auch außerordentlich kostenintensiv.

Der Erfindung liegt die Aufgabe zugrunde, eine gattungsgemäße Energieversorgungsvorrichtung sowie ein Verfahren zu deren Betrieb zu verbessern, so dass ein zuverlässiger dauerhafter Betrieb gewährleistet werden kann.

Als Lösung werden mit der Erfindung eine Energieversorgungseinrichtung sowie ein Verfahren gemäß den unabhängigen Ansprüchen vorgeschlagen.

Vorteilhafte Weiterbildungen ergeben sich anhand von Merkmalen der abhängigen Ansprüche.

Bezüglich einer gattungsgemäßen Energieversorgung wird insbesondere vorgeschlagen, dass die Energieversorgungseinrichtung eine zweite rotierende elektrische Maschine zum Wandeln der mechanischen Energie in elektrische Energie aufweist, wobei die zweite rotierende elektrische Maschine einen in einem zweiten Ständer drehbar angeordneten zweiten Läufer mit einer zweiten Läuferwelle aufweist, wobei die zweite Läuferwelle mechanisch mit der Kurbelwelle gekoppelt ist und wobei die zweite rotierende elektrische Maschine eine zweite elektrische Wicklung aufweist, die mit dem Gleichspannungsnetz elektrisch koppelbar ist, um dem Gleichspannungsnetz die elektrische Energie zuzuführen.

Bezüglich eines gattungsgemäßen Verfahrens wird vorgeschlagen, dass das Wandeln der mechanischen Energie in elektrische Energie ergänzend oder alternativ mittels einer zweiten rotierenden elektrischen Maschine erfolgt, die einen in einem zweiten Ständer drehbar angeordneten zweiten Läufer aufweist, dessen zweite Läuferwelle mit der Kurbelwelle mechanisch gekoppelt ist, wobei die elektrische Energie mittels einer zweiten Wicklung der zweiten rotierenden elektrischen Maschine bereitgestellt wird, und die elektrische Energie dem elektrischen Gleichspannungsnetz zugeführt wird, und wobei die zweite rotierende elektrische Maschine zumindest dann zum Wandeln der Energie aktiviert wird, wenn die erste rotierende elektrische Maschine deaktiviert wird.

Die Erfindung basiert unter anderem auf dem Gedanken, dass die Nutzung des Zweitakt-Dieselmotors zur Gewinnung von elektrischer Energie verbessert werden kann, wenn seine Sicherheit im bestimmungsgemäßen Betrieb besser realisiert werden kann. Zu diesem Zweck schlägt die Erfindung vor, dass die Kurbelwelle mit zwei separaten elektrischen Maschinen mechanisch gekoppelt ist, sodass eine Redundanz geschaffen werden kann, die es erlaubt, den Zweitakt-Dieselmotor auch dann ausreichend zu belasten, wenn eine der beiden elektrischen Maschinen und/oder deren elektrische Kopplungen mit dem Gleichspannungsnetz ausfallen beziehungsweise deaktiviert werden. Dadurch kann die eingangs beschriebene Problematik bezüglich des sicheren Betriebs des Zweitakt-Dieselmotors vermieden werden, weil nämlich zumindest immer eine der rotierenden elektrischen Maschinen und ihre jeweilige elektrische Kopplung aktiviert ist, sodass der Zweitakt-Dieselmotor permanent in hinreichender Weise belastet werden kann, um die zuvor beschriebenen gefährlichen Zustände zu vermeiden.

Dadurch ist es möglich, die Energieversorgungseinrichtung mit einem Zweitakt-Dieselmotor verbessert zu realisieren und die energietechnischen Vorteile des Zweitakt-Dieselmotors gegenüber Viertakt-Motoren für die Bereitstellung von elektrischer Energie zu nutzen. Dabei erlaubt es die Erfindung, dass auf die Nutzung von Schwungrädern weitgehend verzichtet werden kann, weil nämlich die entsprechende Belastung durch wenigstens eine der beiden rotierenden elektrischen Maschinen realisiert werden kann.

Natürlich kann auch vorgesehen sein, dass im bestimmungsgemäßen Betrieb beide der rotierenden elektrischen Maschinen, insbesondere gemeinsam, vorzugsweise zeitgleich, für die Erzeugung von elektrischer Energie genutzt werden. Gleichwohl kann durch die erfindungsgemäße Redundanz erreicht werden, dass bei Ausfall beziehungsweise Deaktivierung einer der beiden rotierenden elektrischen Maschinen oder einer der elektrischen Kopplungen eine zuverlässige Belastung des Zweitakt-Dieselmotors mittels der weiteren, verbliebenen der beiden rotierenden elektrischen Maschinen und deren elektrischer Kopplung sichergestellt werden kann. Die eingangs beschriebenen problematischen Szenarien können dadurch vermieden werden.

Das Gleichspannungsnetz kann vorzugsweise ein Energieversorgungsnetz, insbesondere ein Gleichspannungsenergieversorgungsnetz sein, welches zum Beispiel einen Gleichspannungszwischenkreis umfassen kann. Natürlich kann das Gleichspannungsnetz auch mit weiteren Energieversorgungsnetzen gekoppelt sein, beispielsweise Wechselspannungsnetzen wie einem öffentlichen Energieversorgungsnetz oder dergleichen, und zwar vorzugsweise unter Nutzung geeigneter Energiewandler. An dem Gleichspannungsnetz können aber auch ein oder mehrere elektrische Verbraucher angeschlossen sein, die elektrische Energie für ihren bestimmungsgemäßen Betrieb benötigen. Darüber hinaus kann das Gleichspannungsnetz natürlich auch einen oder mehrere elektrische Energiespeicher, beispielsweise nach Art von Akkumulatoren oder dergleichen umfassen.

Die rotierende elektrische Maschine ist vorzugsweise unmittelbar mit dem Gleichspannungsnetz elektrisch gekoppelt. In diesem Fall kann die rotierende elektrische Maschine beispielsweise als eine Gleichspannungsmaschine oder dergleichen ausgebildet sein. Natürlich kann die Gleichspannungsmaschine eine Steuereinheit umfassen, mittels der die bereitgestellte Gleichspannung eingestellt und/oder geregelt werden kann. Besonders vorteilhaft ist die rotierende elektrische Maschine jedoch durch eine Wechselspannungsmaschine gebildet. In diesem Fall ist die rotierende elektrische Maschine mittelbar mit dem Gleichspannungsnetz elektrisch gekoppelt, und zwar beispielsweise unter Zwischenschaltung eines Energiewandlers wie einem Gleichrichter oder dergleichen.

Dies kann natürlich für beide rotierende elektrische Maschinen vorgesehen sein. Die beiden rotierenden elektrischen Maschinen sind vorzugsweise im Wesentlichen gleich ausgebildet. Dem Grunde nach brauchen sie jedoch nicht gleich ausgebildet zu sein. Je nach Bedarf oder Verfügbarkeit können für die erste und die zweite rotierende elektrische Maschine auch voneinander unterschiedliche elektrische Maschinen vorgesehen sein.

Jede der rotierenden elektrischen Maschinen weist wenigstens eine jeweilige Wicklung auf, die im Ständer oder im Läufer angeordnet sein kann. Die Wicklung kann jedoch auch sowohl im Ständer als auch im Läufer angeordnet sein. Dies ist abhängig von einer jeweiligen Konstruktion der jeweiligen rotierenden elektrischen Maschine. Die Funktion der rotierenden elektrischen Maschine wird ebenfalls als bekannt vorausgesetzt, sodass von detaillierten Erläuterungen abgesehen wird.

Die elektrische Kopplung ist natürlich für die entsprechende elektrische Belastung auszulegen. Wird zum Beispiel die elektrische Kopplung mittels eines jeweiligen diodenbasierten Gleichrichters realisiert, sollten die Dioden auch für die kurzzeitig auftretende kurze große Leistung ausgelegt sein.

Es wird ferner vorgeschlagen, dass sowohl die erste als auch die zweite rotierende elektrische Maschine jeweils dazu ausgebildet ist, die zumindest während eines Kolbenhubs des Zweitakt-Dieselmotors bereitgestellte mechanische Energie unabhängig von der jeweils anderen der rotierenden elektrischen Maschinen in elektrische Energie zu wandeln. Dadurch kann erreicht werden, dass der Zweitakt-Dieselmotor, wenn eine der beiden rotierenden elektrischen Maschinen deaktiviert wird oder ausfällt, durch die jeweilige andere der beiden rotierenden elektrischen Maschinen hinreichend belastet werden kann, sodass ein zuverlässiger, sicherer Betrieb aufrechterhalten werden kann. Dabei können die rotierenden elektrischen Maschinen so ausgebildet sein, dass sie zumindest kurzzeitig für einen vorgebbaren Zeitraum die durch den Zweitakt-Dieselmotor bereitgestellte mechanische Energie zu wandeln vermögen. Dabei kann berücksichtigt werden, dass der Zweitakt-Dieselmotor in der Regel einen großen Hubraum bereitstellt, wodurch bereits durch einen einzelnen Kolbenhub eine große Energiemenge freigesetzt wird. Wird die erste rotierende elektrische Maschine während eines Kolbenhubs deaktiviert oder fällt sie aus, ist es daher günstig, wenn die zweite rotierende elektrische Maschine derart konstruiert ist, dass sie die durch den Kolbenhub bereitgestellte mechanische Energie des Zweitakt-Dieselmotors möglichst unverzüglich zu wandeln vermag. Vorzugsweise sind beide rotierenden elektrischen Maschinen entsprechend konstruiert, sodass sie zumindest kurzzeitig eine entsprechende Leistung wandeln können. Dadurch kann eine erforderliche Redundanz geschaffen werden.

Insgesamt ist für den bestimmungsgemäßen Betrieb des Zweitakt-Dieselmotors zu beachten, dass eine Regelung des Zweitakt-Dieselmotors hinsichtlich des Kraftstoffinhalts bei einem Kolbenhub während des Kolbenhubs natürlich nicht verändert werden kann. Die durch Verbrennung des in einem Brennraum des jeweiligen Zylinders vorgegebenen Brennstoffs freigesetzte Energie, die zu einer entsprechenden mechanischen Energie führt, ist daher vorzugsweise durch wenigstens eine der beiden rotierenden elektrischen Maschinen zu wandeln. Dabei kann der Brennraum des Zylinders bereits beim nächsten Kolbenhub entsprechend anders mit Brennstoff beaufschlagt sein, um beispielsweise auf das Deaktivieren beziehungsweise Ausfallen einer der beiden rotierenden elektrischen Maschinen zu reagieren.

Weiterhin wird vorgeschlagen, dass die erste und die zweite elektrische Maschine als mehrphasige Synchronmaschine ausgebildet sind. Mehrphasige Synchronmaschinen eignen sich besonders für die Bereitstellung von elektrischer Energie. Sie sind besonders günstig regelbar. Die mehrphasige Synchronmaschine ist vorzugsweise eine dreiphasige Synchronmaschine, wodurch auf insbesondere verfügbare elektrische Maschinen günstig zurückgegriffen werden kann. Darüber hinaus können in alternativen Ausgestaltungen bedarfsweise eine oder zwei der rotierenden elektrischen Maschinen auch als Asynchronmaschine, insbesondere doppeltgespeiste Asynchronmaschine, oder auch als Gleichstrommaschine ausgebildet sein.

Die Energieversorgungseinrichtung weist wenigstens einen Energiewandler zum elektrischen Koppeln der ersten und/oder der zweiten elektrischen Wicklung mit dem Gleichspannungsnetz auf. Der Energiewandler kann bei einer rotierenden Maschine, die als Wechselspannungsmaschine ausgebildet ist, beispielsweise einer mehrphasigen Synchronmaschine, als Gleichrichtereinheit, insbesondere als Brückengleichrichter, beispielsweise unter Nutzung von Dioden, Thyristoren, Transistoren und/oder dergleichen ausgebildet sein. Vorzugsweise ist für jede der rotierenden elektrischen Maschinen ein separater Energiewandler vorgesehen. Ist der Energiewandler als Gleichrichter ausgebildet, kann er darüber hinaus auch einen Spannungswandler umfassen, mittels dem eine von der Gleichrichtereinheit bereitgestellte pulsierende Gleichspannung in eine für das Gleichspannungsnetz vorgesehene Gleichspannung erreicht werden kann. Der Energiewandler kann aber auch beispielsweise ein Umrichter, insbesondere ein Wechselrichter oder dergleichen sein. Je nach Art der rotierenden elektrischen Maschine kann der Energiewandler auch ein DC/DC-Wandler oder dergleichen sein. Je nach Art und Anwendung der rotierenden elektrischen Maschine können auch Kombinationen hiervon vorgesehen sein.

Die Energieversorgungseinrichtung weist wenigstens eine elektrische Schalteinheit zum Koppeln der ersten und/oder der zweiten elektrischen Wicklung mit dem Gleichspannungsnetz auf. Durch die Schalteinheit kann eine vorgegebene elektrische Kopplung der ersten und/oder der zweiten Wicklung mit dem Gleichspannungsnetz erreicht werden. Die Schalteinheit kann zu diesem Zweck zum Beispiel als eine Umschalteinheit ausgebildet sein, die jeweils entweder die erste oder die zweite Wicklung der jeweiligen rotierenden elektrischen Maschine mit dem Gleichspannungsnetz elektrisch koppelt. Darüber hinaus kann natürlich vorgesehen sein, dass für jede der Wicklungen der rotierenden elektrischen Maschinen eine jeweilige individuell zugeordnete Schalteinheit vorgesehen ist, mittels der in vorgebbarer Weise die elektrische Kopplung hergestellt werden kann. Die Schalteinheit kann zum Beispiel als elektromechanische Schalteinheit mit hierfür geeigneten elektromechanischen Schaltelementen, wie zum Beispiel Schaltkontakten oder dergleichen, ausgebildet sein. Darüber hinaus kann die Schalteinheit natürlich auch als elektronische Schalteinheit ausgebildet sein und zu diesem Zweck elektronische Schaltelemente umfassen.

Ein Schaltelement im Sinne dieser Offenbarung ist dabei vorzugsweise ein steuerbares elektronisches Schaltelement, beispielsweise ein steuerbarer elektronischer Halbleiterschalter der vorzugsweise zum bidirektionalen Sperren ausgebildet ist, indem beispielsweise zwei Transistoren antiseriell geschaltet vom Schaltelement umfasst sind, zwei antiparallel geschaltete Thyristoren vom Schaltelement umfasst sind, Kombinationsschaltungen hiervon, insbesondere mit parallelgeschalteten Inversdioden, beispielsweise unter Nutzung von Gate-Turn-Off-Thyristoren (GTO), unter Nutzung von Insulated-Gate-BipolarTransistoren (IGBT), Kombinationen hiervon oder dergleichen. Dem Grunde nach kann das Schaltelement jedoch auch Feldeffekttransistoren umfassen, insbesondere Metalloxide-Semiconductor-Field-Effect-Transistoren (MOSFET) oder dergleichen.

Zur Bereitstellung der gewünschten Energiewandlungsfunktionalität des Energiewandlers werden die Schaltelemente im Schaltbetrieb betrieben. In Bezug auf ein elektronisches Schaltelement wie einen Halbleiterschalter unter Nutzung eines Transistors bedeutet der Schaltbetrieb, dass der Transistor in einem eingeschalteten Schaltzustand zwischen den eine Schaltstrecke bildenden Anschlüssen des Transistors einen sehr kleinen elektrischen Widerstand bereitstellt, sodass ein hoher Stromfluss bei sehr kleiner Restspannung möglich ist. In einem ausgeschalteten Schaltzustand ist hingegen die Schaltstrecke des Transistors hochohmig, das heißt, sie stellt einen hohen elektrischen Widerstand bereit, sodass auch bei hoher, an der Schaltstrecke anliegender elektrischer Spannung im Wesentlichen kein oder nur ein sehr geringer, insbesondere vernachlässigbarer, Stromfluss vorliegt. Hiervon unterscheidet sich ein Linearbetrieb bei Transistoren, der aber bei Umrichtern der gattungsgemäßen Art in der Regel nicht zum Einsatz kommt.

Das Schaltelement weist zur Realisierung der Schaltfunktionalität wenigstens einen Steueranschluss auf, an dem es mit von einer Steuereinrichtung bereitgestellten Schaltsignalen beaufschlagbar ist, sodass die gewünschte Schaltfunktion des Schaltelements realisiert werden kann. Das Schaltsignal kann ein binäres Schaltsignal sein, welches zwei Zustandswerte einnehmen kann, um die gewünschte Schaltfunktion des Schaltelements bereitstellen zu können. Beispielsweise kann das Schaltsignal eine Impulsfolge umfassen, mittels der der Steueranschluss beaufschlagt wird. Dies ist vor allem bei Thyristoren und GTO zweckmäßig. Darüber hinaus kann bei Transistoren vorgesehen sein, dass das Schaltsignal als Rechtecksignal ausgebildet ist, wobei ein jeweiliger Schaltzustand des Schaltelements einem der elektrischen Potentiale des Rechtecksignals zugeordnet werden kann. Ein solches Signal ist beispielsweise für Transistoren, insbesondere für bipolare Transistoren, Feldeffekttransistoren oder dergleichen zweckmäßig. Ein zeitliches Verhältnis der beiden elektrischen Potentiale bestimmt in der Regel das Tastverhältnis.

Die Energieversorgungseinrichtung umfasst eine Steuereinrichtung zum Steuern der ersten und der zweiten rotierenden elektrischen Maschine und des wenigstens einen Energiewandlers und der wenigstens einen elektrischen Schalteinheit. Dadurch kann die Energieversorgungseinrichtung in geeigneter Weise gesteuert werden. Insbesondere kann mit der Steuereinrichtung der bestimmungsgemäße Betrieb der ersten und der zweiten rotierenden elektrischen Maschine überwacht werden. Die Steuereinrichtung ist vorzugsweise dazu ausgebildet, wenn eine der beiden rotierenden elektrischen Maschinen deaktiviert wird oder ausfällt, die andere der beiden rotierenden elektrischen Maschinen unmittelbar zu aktivieren, sodass zumindest die mit einem Kolbenhub freigesetzte mechanische Energie gewandelt werden kann. Der bestimmungsgemäße Betrieb der rotierenden elektrischen Maschinen kann beispielsweise mittels einem oder mehrerer geeigneter Sensoren erfasst werden, zum Beispiel indem eine geeignete elektrische Größe, beispielsweise ein elektrischer Strom, oder auch eine mechanische Größe, beispielsweise ein Drehmoment oder dergleichen, erfasst wird. Natürlich kann auch eine Kombination hiervon vorgesehen sein.

Die Steuereinrichtung kann ferner insbesondere Steuersignale wie Schaltsignale für die Schaltelemente für den wenigstens einen Energiewandler und/oder die Schalteinheit bereitstellen. Nicht nur zu diesem Zweck kann die Steuereinrichtung eine Hardwareschaltung und/oder eine programmgesteuerte Rechnereinheit oder dergleichen umfassen. Natürlich kann die Steuereinrichtung als separate vorzugsweise elektronische Baugruppe ausgebildet sein. Die Steuereinrichtung kann darüber hinaus zumindest teilweise auch von einer übergeordneten Steuerung zum Beispiel für das Gleichspannungsnetz, beispielsweise eine Steuerung einer Antriebseinrichtung, die durch das Gleichspannungsnetz mit elektrischer Energie versorgt wird, oder dergleichen, umfasst sein.

Ferner wird vorgeschlagen, dass die erste Läuferwelle mit einem ersten Ende der Kurbelwelle und die zweite Läuferwelle mit einem dem ersten Ende gegenüberliegenden zweiten Ende der Kurbelwelle mechanisch gekoppelt ist. Diese Ausgestaltung hat den Vorteil, dass die Kurbelwelle im Bereich der Kopplung mit den Läuferwellen für eine geringere Beanspruchung ausgelegt zu werden braucht, als wenn beide rotierenden elektrischen Maschinen mit dem gleichen Ende der Kurbelwelle gekoppelt wären. Je nach Konstruktion der Energieversorgungsvorrichtung kann jedoch bei Bedarf auch vorgesehen sein, dass beide rotierenden elektrischen Maschinen lediglich mit einem der Enden der Kurbelwellen mechanisch gekoppelt sind. Die mechanische Kopplung der Kurbelwelle mit den rotierenden elektrischen Maschinen kann vorzugsweise unmittelbar erfolgen, indem zum Beispiel die Läuferwellen mit der Kurbelwelle mechanisch verbunden werden. Darüber hinaus besteht natürlich die Möglichkeit, die mechanische Kopplung mittels eines oder mehrerer Getriebe zu realisieren.

Die zweite rotierende elektrische Maschine wird zumindest dann zum Wandeln der Energie aktiviert, wenn die erste rotierende elektrische Maschine deaktiviert wird. Das Aktivieren erfolgt insbesondere in einem sehr kleinen Zeitbereich, der kleiner als ein für einen Kolbenhub erforderlicher Zeitraum ist. Dadurch kann sichergestellt werden, dass die bei einem Kolbenhub freigesetzte mechanische Energie zumindest von einer der beiden rotierenden elektrischen Maschinen zuverlässig in elektrische Energie gewandelt werden kann. Es kann insgesamt vorgesehen sein, dass die rotierenden elektrischen Maschinen derart ausgebildet sind, dass die mittels des Zweitakt-Dieselmotors bereitstellbare maximale mechanische Energie nur für einen vorgegebenen Zeitraum aufgenommen zu werden braucht. Dieser vorgegebene Zeitraum kann wenigstens die Zeit eines Kolbenhubs oder auch eine vorgebbare Anzahl von Kolbenhüben umfassen. Es kann jedoch auch vorgesehen sein, dass abhängig von Steuerungs- beziehungsweise Regelungseigenschaften des Zweitakt-Dieselmotors der Zeitraum mehrere Kolbenhübe umfasst.

Insbesondere wird vorgeschlagen, dass ein Zeitraum zwischen dem Deaktivieren der ersten rotierenden elektrischen Maschine und dem Aktivieren der zweiten rotierenden elektrischen Maschine kleiner als ein Hubzeitraum eines Kolbenhubs des Zweitakt-Dieselmotors ist. Dadurch kann bereits während eines einzigen Hubzeitraums ein Übergang des Energiewandels von der ersten rotierenden elektrischen Maschine zur zweiten rotierenden elektrischen Maschine oder umgekehrt erfolgen. Dies hat den Vorteil, dass die Kurbelwelle des Zweitakt-Dieselmotors auch während des Hubzeitraums in geeigneter Weise belastet werden kann.

Weiterhin wird vorgeschlagen, dass das Aktivieren und/oder das Deaktivieren mittels einer elektrischen Schalteinheit und/oder mittels einer entsprechenden Steuerung des wenigstens einen Energiewandlers erfolgt. Zu diesem Zweck kann vorgesehen sein, dass die wenigstens eine Schalteinheit in geeigneter Weise betätigt wird, beispielsweise mittels der Steuereinrichtung. Alternativ oder ergänzend kann auch der wenigstens eine Energiewandler entsprechend gesteuert werden, damit das Aktivieren und/oder das Deaktivieren realisiert werden kann. So kann das Aktivieren und/oder das Deaktivieren beispielsweise durch ein entsprechendes Aktivieren beziehungsweise ein entsprechendes Deaktivieren der Energiewandlungsfunktion realisiert sein oder dergleichen. Der wenigstens eine Energiewandler kann durch einen steuerbaren Gleichrichter oder dergleichen gebildet sein, dessen Funktion zum Beispiel mittels der Steuereinrichtung in geeigneter Weise gesteuert werden kann.

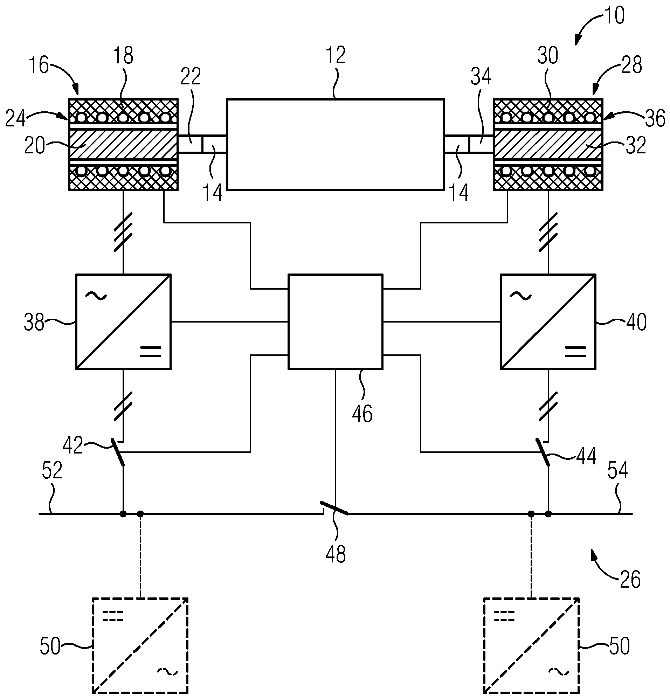

Weitere Vorteile und Merkmale ergeben sich aus der folgenden Beschreibung eines Ausführungsbeispiels anhand der Figur. In dem Ausführungsbeispiel bezeichnen gleiche Bezugszeichen gleiche Merkmale und Funktionen.

Es zeigt die einzige Figur eine schematische Blockschaltbilddarstellung einer Energieversorgungseinrichtung mit einem Zweitakt-Dieselmotor und zwei Synchronmaschinen.

Die Figur zeigt in einer schematischen Blockschaltbilddarstellung eine elektrische Energieversorgungseinrichtung 10 zum Bereitstellen von elektrischer Energie mit einem Zweitakt-Dieselmotor 12, mittels dem im bestimmungsgemäßen Betrieb durch Verbrennen eines geeigneten Brennstoffs mechanische Energie an einer Kurbelwelle 14 des Zweitakt-Dieselmotors 12 bereitgestellt wird. Der Zweitakt-Dieselmotor 12 ist vorliegend als Verbrennungskraftmaschine für eine Leistung von etwa 80 MW ausgebildet. In alternativen Ausgestaltungen kann die Leistung auch abweichend sein, beispielsweise in einem Bereich von etwa 6 MW bis etwa 80 MW oder auch abweichend hiervon. Die grundlegende Funktion des Zweitakt-Dieselmotors 12 wird für die folgenden Ausführungen als bekannt für den Fachmann vorausgesetzt.

Zweitakt-Dieselmotoren werden heutzutage üblicherweise zum Antrieb von Wasserfahrzeugen, insbesondere Schiffen, verwendet und dienen dazu, einen im Wasser angeordneten Propeller des Wasserfahrzeugs drehend anzutreiben. Zweitakt-Dieselmotoren werden zu diesem Zweck üblicherweise in einem Drehzahlbereich von etwa 60 Umdrehungen pro Minute bis etwa 120 Umdrehungen pro Minute betrieben. Dadurch ist es möglich, den Propeller unmittelbar mit der Kurbelwelle des Zweitakt-Dieselmotors zum Zwecke des Antriebs zu verbinden. Getriebe brauchen hierbei nicht vorgesehen zu werden.

Der Zweitakt-Dieselmotor 12 hat sich für den Einsatz als Antriebseinheit bei Wasserfahrzeugen bewährt. Gleichwohl erweist es sich problematisch, den Zweitakt-Dieselmotor 12 für die Nutzung von elektrischer Energie einzusetzen. Zu diesem Zweck ist es wichtig, sicherzustellen, dass der Zweitakt-Dieselmotor vor einer Überdrehzahl geschützt werden kann. Bei Schiffsantrieben wird dies in der Regel durch den Propeller erreicht.

Um den Zweitakt-Dieselmotor 12 für den Einsatz der Bereitstellung von elektrischer Energie zu nutzen, ist gemäß der Figur vorgesehen, dass die Energieversorgungseinrichtung 10 neben dem Zweitakt-Dieselmotor 12 eine erste Synchronmaschine 16 zum Wandeln der mechanischen Energie in elektrische Energie und eine zweite rotierende elektrische Maschine 28 zum Wandeln der mechanischen Energie in elektrische Energie aufweist. Die erste rotierende elektrische Maschine 16 weist einen in einem ersten Ständer 18 drehbar angeordneten ersten Läufer 20 mit einer Läuferwelle 22 auf. Der Läufer 20 ist vorliegend permanenterregt ausgebildet. In alternativen Ausgestaltungen kann hier natürlich auch ein fremderregter Läufer vorgesehen sein. Die erste Läuferwelle 22 ist mechanisch mit einem ersten Ende der Kurbelwelle 14 vorliegend unmittelbar gekoppelt, das heißt, es ist kein Getriebe vorgesehen. Ferner ist ständerseitig eine erste elektrische Wicklung 24 vorgesehen, die vorliegend dreiphasig ausgebildet ist.

Die zweite Synchronmaschine 28 weist einen zweiten Ständer 30 auf, in dem ein zweiter Läufer 32 mit einer zweiten Läuferwelle 34 drehbar angeordnet ist. Die zweite Läuferwelle 34 ist mit einem zweiten Ende der Kurbelwelle 14 ebenfalls unmittelbar verbunden. Die zweite Synchronmaschine 28 ist ebenfalls als permanenterregte Synchronmaschine ausgebildet und weist ständerseitig eine zweite elektrische Wicklung 36 auf.

Die erste und die zweite elektrische Wicklung 24, 36 sind - wie im Folgenden noch ausgeführt ist - mit einem Gleichspannungsnetz 26 elektrisch koppelbar, dem im jeweils gekoppelten Zustand elektrische Energie zugeführt werden kann. Das Gleichspannungsnetz 26 ist vorliegend für eine Betriebsgleichspannung von etwa 3 kV ausgebildet.

Das Gleichspannungsnetz 26 weist in der vorliegenden Ausgestaltung zwei Netzwerkzweige auf, nämlich einen ersten Netzwerkzweig 52 und einen zweiten Netzwerkzweig 54, die über eine Schalteinheit 48 miteinander koppelbar sind. Die Schalteinheit 48 kann zum Beispiel als Schütz ausgebildet sein. An jedem der Netzwerkzweige 52, 54 sind elektrische Verbraucher 50 angeschlossen, die für ihren bestimmungsgemäßen Betrieb elektrische Energie benötigen. Die elektrischen Verbraucher 50 sind vorliegend nicht weiter spezifiziert und können auch elektrische Energiespeicher umfassen oder von diesen gebildet sein.

In der vorliegenden Ausgestaltung ist vorgesehen, dass die erste und die zweite Synchronmaschine 16, 28 dazu ausgebildet sind, die zumindest während eines Kolbenhubs des Zweitakt-Dieselmotors 12 bereitgestellte mechanische Energie unabhängig von der jeweils anderen der Synchronmaschinen 16, 28 für sich genommen in elektrische Energie wandeln zu können. Das bedeutet, dass zumindest kurzzeitig jede der beiden Synchronmaschinen 16, 28 für sich genommen die gesamte durch den Kolbenhub bereitgestellte mechanische Energie in elektrische Energie zu wandeln vermag. Dadurch wird eine Redundanz in Bezug auf die Energiewandlung bereitgestellt, die es erlaubt, bei einer Deaktivierung einer der beiden Synchronmaschinen 16, 28 mit der jeweils anderen der verbleibenden Synchronmaschinen 16, 28 die kurzzeitig insgesamt zur Verfügung gestellte mechanische Energie in elektrische Energie zu wandeln. Dadurch kann mit der verbleibenden der beiden Synchronmaschinen 16, 28 eine entsprechende Belastung des Zweitakt-Dieselmotors 12 erreicht werden, sodass der Zweitakt-Dieselmotor 12 vor einer Überdrehzahl geschützt werden kann.

Damit die Synchronmaschinen 16, 28 eine entsprechende Belastung für den Zweitakt-Dieselmotor 12 auch bereitzustellen vermögen, ist es erforderlich, dass auch die elektrische Kopplung der beiden Synchronmaschinen 16, 28 mit dem Gleichspannungsnetz 26 zumindest kurzzeitig für eine entsprechende Leistung ausgebildet sind. Darüber hinaus ist es natürlich auch erforderlich, dass das Gleichspannungsnetz 26 zumindest kurzzeitig diese elektrische Leistung auch aufnehmen kann. Dies wird im Folgenden vorausgesetzt. Zu diesem Zweck kann das Gleichspannungsnetz 26 einen oder mehrere Akkumulatoren als elektrische Energiespeicher oder dergleichen aufweisen. Natürlich können alternativ oder ergänzend auch geeignete Verbraucher kurzzeitig zugeschaltet werden, um die elektrische Energie aufnehmen zu können.

Jede der ersten und der zweiten Wicklungen 24, 36 ist mit einem jeweiligen Gleichrichter 38, 40 elektrisch gekoppelt, der die durch die erste und zweite elektrische Wicklung 24, 36 jeweils bereitgestellte dreiphasige Wechselspannung gleichrichtet und eine elektrische Gleichspannung für das Gleichspannungsnetz 26 bereitstellt. Der erste und der zweite Gleichrichter 38, 40 sind vorliegend als dreiphasiger Brückengleichrichter unter Nutzung von Dioden ausgebildet. In alternativen Ausgestaltungen kann natürlich auch eine ergänzende Spannungswandlung vorgesehen sein, um eine Anpassung an das Gleichspannungsnetz 26 gegebenenfalls bereitstellen zu können.

Gleichspannungsseitig sind der erste und der zweite Gleichrichter 38, 40 mit jeweiligen Schalteinheiten 42, 44 elektrisch gekoppelt, die, abhängig von ihrem jeweiligen elektrischen Schaltzustand, eine elektrische Verbindung zum jeweils ersten Netzwerkzweig 52 beziehungsweise zweiten Netzwerkzweig 54 herstellen. Die Schalteinheiten 42, 44 können beispielsweise als Schütz ausgebildet sein. Auf diese Weise kann die elektrische Kopplung der ersten beziehungsweise zweiten elektrischen Wicklung 24, 36 mit dem Gleichspannungsnetz 26 und hier insbesondere dem ersten Netzwerkzweig 52 und dem zweiten Netzwerkzweig 54 hergestellt werden.

In der vorliegenden Ausgestaltung ist ferner vorgesehen, dass die Energieversorgungseinrichtung 10 eine Steuereinrichtung 46 umfasst, die mit den Synchronmaschinen 16, 28, den Gleichrichtern 38, 40 sowie den Schalteinheiten 42, 44, 48 kommunikationstechnisch gekoppelt ist und diese in vorgebbarer Weise zu steuern vermag. Darüber hinaus können über die kommunikationstechnische Kopplung mittels nicht dargestellter Sensoreinheiten erfasste Betriebszustände an die Steuereinrichtung 46 übermittelt werden, sodass die Steuereinrichtung 46 die Betriebszustände auswerten kann und entsprechende Steuersignale abgeben kann.

In einem beispielhaften Betriebszustand kann vorgesehen sein, dass die Schalteinheit 48 im ausgeschalteten Schaltzustand ist, so dass die Netzwerkzweige 52, 54 voneinander elektrisch getrennt sind. Die Schalteinheiten 42, 44 sind hingegen im eingeschalteten Schaltzustand, sodass eine elektrische Kopplung der ersten Wicklung 24 über den ersten Brückengleichrichter 38 und die erste Schalteinheit 42 zum ersten Netzwerkzweig 52 erfolgt. Der erste Netzwerkzweig 52 wird somit energietechnisch durch die erste Synchronmaschine 16 mit elektrischer Energie versorgt.

Entsprechend ist die zweite Wicklung 36 über den zweiten Gleichrichter 40 und die zweite Schalteinheit 44 mit dem zweiten Netzwerkzweig 54 elektrisch gekoppelt, sodass die zweite Synchronmaschine 28 den zweiten Netzwerkzweig 54 mit elektrischer Energie versorgt. Die Steuereinrichtung 46 überwacht die Funktion und steuert die entsprechenden Einheiten beziehungsweise Einrichtungen.

Fällt nunmehr aufgrund einer technischen Störung der ersten Synchronmaschine 16 diese bezüglich der Energieversorgung aus, kann dies mittels der Steuereinrichtung 46 erfasst werden. Die Steuereinrichtung 46 gibt dann unverzüglich einen Steuerbefehl an die Schalteinheit 48 aus, so dass dies vom ausgeschalteten Schaltzustand in den eingeschalteten Schaltzustand wechselt. Entsprechend wird die erste Schalteinheit 42 angesteuert, sodass dieses vom eingeschalteten Schaltzustand in den ausgeschalteten Schaltzustand wechselt. Dadurch sind die erste Synchronmaschine 16 sowie auch der erste Gleichrichter 38 von der Energieerzeugung entkoppelt.

Da der Zweitakt-Dieselmotor 12 aufgrund der langsamen Drehzahl und des hohen Energieinhalts bei einem Kolbenhub nur vergleichsweise träge zu reagieren vermag, kann nunmehr die momentan noch im Zweitakt-Dieselmotor 12 vorhandene Energie, die in mechanische Energie umgesetzt wird, ergänzend über die zweite Synchronmaschine 28 und den zweiten Gleichrichter 40 dem Gleichspannungsnetz 26 insgesamt zugeführt werden. Dadurch kann die Belastung des Zweitakt-Dieselmotors 12 aufrechterhalten werden, sodass der Zweitakt-Dieselmotor 12 nicht in einen unerwünschten Betriebszustand, insbesondere in einen Betriebszustand mit Überdrehzahl, gelangen kann. Der Zweitakt-Dieselmotor 12 ist dadurch geschützt.

In der vorliegenden Ausgestaltung ist vorgesehen, dass der beispielhaft erläuterte Schaltvorgang, der durch die Steuereinrichtung 46 bei Auftreten einer Störung der ersten Synchronmaschine 16 erfolgt, innerhalb von wenigen Millisekunden erfolgt, beispielsweise in einem Zeitraum von etwa 1 ms bis etwa 8 ms, vorzugsweise in einem Bereich von etwa 1,5 ms bis etwa 5 ms.

Darüber hinaus sind die Gleichrichter 38, 40 sowie auch die erste und die zweite Schalteinheit 42, 44 für die Gesamtleistung ausgelegt, die von dem Zweitakt-Dieselmotor 12 in Verbindung mit den Synchronmaschinen 16, 28 als elektrische Leistung bereitgestellt werden kann.

Das Ausführungsbeispiel dient ausschließlich der Erläuterung der Erfindung und soll diese nicht beschränken. In alternativen Ausgestaltungen kann es bei Bedarf vorgesehen sein, dass die beiden Synchronmaschinen 16, 28 mit ihren jeweiligen Läuferwellen 22, 34 an einem gemeinsamen Ende der Kurbelwelle 14 angeschlossen sind. Hierbei ist jedoch dann zu beachten, dass die Kurbelwelle für eine entsprechende Leistung ausgelegt sein sollte.

## Patentansprüche

1. Energieversorgungseinrichtung (10) zum Bereitstellen von elektrischer Energie, mit:
- einem Zweitakt-Dieselmotor (12) zum Bereitstellen von mechanischer Energie, der eine Kurbelwelle (14) zum Bereitstellen der mechanischen Energie aufweist, und
- einer ersten rotierenden elektrischen Maschine (16) zum Wandeln der mechanischen Energie in elektrische Energie, wobei die erste rotierende elektrische Maschine (16) einen in einem ersten Ständer (18) drehbar angeordneten ersten Läufer (20) mit einer ersten Läuferwelle (22) aufweist, wobei die erste Läuferwelle (22) mechanisch mit der Kurbelwelle (14) gekoppelt ist und wobei die erste rotierende elektrische Maschine (16) eine erste elektrische Wicklung (24) aufweist, die mit einem ersten Netzwerkzweig (52) eines Gleichspannungsnetzes (26) elektrisch koppelbar ist, um dem Gleichspannungsnetz (26) die elektrische Energie zuzuführen,
- einer zweiten rotierenden elektrischen Maschine (28) zum Wandeln der mechanischen Energie in elektrische Energie, wobei die zweite rotierende elektrische Maschine (28) einen in einem zweiten Ständer (30) drehbar angeordneten zweiten Läufer (32) mit einer zweiten Läuferwelle (34) aufweist, wobei die zweite Läuferwelle (34) mechanisch mit der Kurbelwelle (14) gekoppelt ist und wobei die zweite rotierende elektrische Maschine (28) eine zweite elektrische Wicklung (36) aufweist, die mit einem zweiten Netzwerkzweig (54) des Gleichspannungsnetzes (26) elektrisch koppelbar ist, um dem Gleichspannungsnetz (26) die elektrische Energie zuzuführen,
- einem ersten und zweiten Energiewandler (38, 40) zum elektrischen Koppeln der ersten und der zweiten elektrischen Wicklung (24, 36) mit dem Gleichspannungsnetz (26), **gekennzeichnet durch** - eine erste und zweite elektrische Schalteinheit (42, 44) zum elektrischen Koppeln der ersten und der zweiten elektrischen Wicklung (24, 36) über den ersten und zweiten Energiewandler (38, 40) mit dem Gleichspannungsnetz (26),
- eine weitere elektrische Schalteinheit (48) zum elektrischen Koppeln des ersten Netzwerkzweigs (52) mit dem zweiten Netzwerkzweig (54) und
- eine Steuereinrichtung (46) zum Steuern der ersten und der zweiten rotierenden elektrischen Maschine (16, 28) und des wenigstens ersten und zweiten Energiewandlers (38, 40) und der wenigstens einen weiteren elektrischen Schalteinheit (48) und der ersten und zweiten elektrischen Schalteinheit (42, 44) , die dazu eingerichtet ist, die zweite rotierende elektrische Maschine (28) zumindest dann zum Wandeln der Energie zu aktivieren, wenn die erste rotierende elektrische Maschine (16) deaktiviert wird, wobei die erste elektrische Schalteinheit (42) geöffnet und die weitere elektrische Schalteinheit (48) geschlossen wird.

2. Energieversorgungseinrichtung nach Anspruch 1, **dadurch gekennzeichnet, dass** sowohl die erste als auch die zweite rotierende elektrische Maschine (16, 28) jeweils dazu ausgebildet ist, die zumindest während eines Kolbenhubs des Zweitakt-Dieselmotors (12) bereitgestellte mechanische Energie unabhängig von der jeweils anderen der rotierenden elektrischen Maschinen (16, 28) in elektrische Energie zu wandeln.

3. Energieversorgungseinrichtung nach einem der vorhergehenden Ansprüche, **dadurch gekennzeichnet, dass** die erste und/oder die zweite rotierende elektrische Maschine (16, 28) als mehrphasige Synchronmaschine ausgebildet ist.

4. Energieversorgungseinrichtung nach einem der vorhergehenden Ansprüche, **dadurch gekennzeichnet, dass** die erste Läuferwelle (22) mit einem ersten Ende der Kurbelwelle (14) und die zweite Läuferwelle (34) mit einem dem ersten Ende gegenüberliegenden zweiten Ende der Kurbelwelle (14) mechanisch gekoppelt ist.

5. Verfahren zum Bereitstellen von elektrischer Energie mittels einer Energieversorgungseinrichtung (10), mit den Schritten:
- Bereitstellen von mechanischer Energie mittels eines Zweitakt-Dieselmotors (12), wobei die mechanische Energie an einer Kurbelwelle (14) des Zweitakt-Dieselmotors (12) bereitgestellt wird,
- Wandeln der mechanischen Energie in elektrische Energie mittels einer ersten rotierenden elektrischen Maschine (16), die einen in einem ersten Ständer (18) drehbar angeordneten ersten Läufer (20) aufweist, dessen erste Läuferwelle (22) mit der Kurbelwelle (14) mechanisch gekoppelt ist, und/oder Wandeln der mechanischen Energie in elektrische Energie mittels einer zweiten rotierenden elektrischen Maschine (28), die einen in einem zweiten Ständer (30) drehbar angeordneten zweiten Läufer (32) aufweist, dessen zweite Läuferwelle (34) mit der Kurbelwelle (14) mechanisch gekoppelt ist, wobei die elektrische Energie mittels einer ersten Wicklung (24) der ersten rotierenden elektrischen Maschine (16) und/oder mittels einer zweiten Wicklung (36) der zweiten rotierenden elektrischen Maschine (28) bereitgestellt wird,
- Zuführen der elektrischen Energie zu einem elektrischen Gleichspannungsnetz (26),
**dadurch gekennzeichnet, dass** eine elektrische Kopplung der ersten Wicklung (24) über einen ersten Energiewandler (38) und eine erste Schalteinheit (42) zu einem ersten Netzwerkzweig (52) eines Gleichspannungsnetzes (26) erfolgt und eine elektrische Kopplung der zweiten Wicklung (36) über einen zweiten Energiewandler (40) und eine zweite Schalteinheit (44) zu einem zweiten Netzwerkzweig (54) des Gleichspannungsnetzes (26) erfolgt und eine weitere, zwischen dem ersten Netzwerkzweig (52) und dem zweiten Netzwerkzweig (54) angeordnete Schalteinheit (48) geöffnet ist,
wobei die zweite rotierende elektrische Maschine (28) zumindest dann zum Wandeln der Energie aktiviert wird, wenn die erste rotierende elektrische Maschine (16) deaktiviert wird, wobei die erste Schalteinheit (42) geöffnet und die weitere Schalteinheit (48) geschlossen wird.

6. Verfahren nach Anspruch 5, **dadurch gekennzeichnet, dass** ein Zeitraum zwischen dem Deaktivieren der ersten rotierenden elektrischen Maschine (16) und dem Aktivieren der zweiten rotierenden elektrischen Maschine (28) kleiner als ein Hubzeitraum eines Kolbenhubs des Zweitakt-Dieselmotors (12) ist.

## Claims

1. Energy supply device (10) for providing electrical energy, having:
- a two-stroke diesel engine (12) for providing mechanical energy, which has a crankshaft (14) for providing the mechanical energy, and
- a first rotating electric machine (16) for converting the mechanical energy into electrical energy, wherein the first rotating electric machine (16) has a first rotor (20) that is arranged so as to be rotatable in a first stator (18) and that has a first rotor shaft (22), wherein the first rotor shaft (22) is mechanically coupled to the crankshaft (14), and wherein the first rotating electric machine (16) has a first electrical winding (24) that can be electrically coupled to a first network branch (52) of a DC voltage network (26) in order to supply the electrical energy to the DC voltage network (26),
- a second rotating electric machine (28) for converting the mechanical energy into electrical energy, wherein the second rotating electric machine (28) has a second rotor (32) that is arranged so as to be rotatable in a second stator (30) and that has a second rotor shaft (34), wherein the second rotor shaft (34) is mechanically coupled to the crankshaft (14), and wherein the second rotating electric machine (28) has a second electrical winding (36) that can be electrically coupled to a second network branch (54) of the DC voltage network (26) in order to supply the electrical energy to the DC voltage network (26),
- a first and a second energy converter (38, 40) for electrically coupling the first and the second electrical winding (24, 36) to the DC voltage network (26),
**characterized by**
- a first and a second electrical switching unit (42, 44) for electrically coupling the first and the second electrical winding (24, 36) to the DC voltage network (26) via the first and the second energy converter (38, 40),
- a further electrical switching unit (48) for electrically coupling the first network branch (52) to the second network branch (54), and
- a control device (46) for controlling the first and the second rotating electric machine (16, 28) and the at least first and second energy converter (38, 40) and the at least one further electrical switching unit (48) and the first and the second electrical switching unit (42, 44) that is configured to activate the second rotating electric machine (28) to convert the energy at least when the first rotating electric machine (16) is deactivated, wherein the first electrical switching unit (42) is opened and the further electrical switching unit (48) is closed.

2. Energy supply device according to Claim 1, **characterized in that** the first and the second rotating electric machine (16, 28) are each designed to convert the mechanical energy provided at least during a piston stroke of the two-stroke diesel engine (12) into electrical energy independently of the respective other one of the rotating electric machines (16, 28) .

3. Energy supply device according to either of the preceding claims, **characterized in that** the first and/or the second rotating electric machine (16, 28) is in the form of a multiphase synchronous machine.

4. Energy supply device according to one of the preceding claims, **characterized in that** the first rotor shaft (22) is mechanically coupled to a first end of the crankshaft (14) and the second rotor shaft (34) is mechanically coupled to a second end of the crankshaft (14) opposite the first end.

5. Method for providing electrical energy by means of an energy supply device (10), having the steps of:
- providing mechanical energy by means of a two-stroke diesel engine (12), wherein the mechanical energy is provided at a crankshaft (14) of the two-stroke diesel engine (12),
- converting the mechanical energy into electrical energy by means of a first rotating electric machine (16) that has a first rotor (20) that is arranged so as to be rotatable in a first stator (18), the first rotor shaft (22) of which is mechanically coupled to the crankshaft (14), and/or
converting the mechanical energy into electrical energy by means of a second rotating electric machine (28) that has a second rotor (32) that is arranged so as to be rotatable in a second stator (30), the second rotor shaft (34) of which is mechanically coupled to the crankshaft (14), wherein the electrical energy is provided by means of a first winding (24) of the first rotating electric machine (16) and/or by means of a second winding (36) of the second rotating electric machine (28),
- supplying the electrical energy to an electrical DC voltage network (26),
**characterized in that** the first winding (24) is electrically coupled to a first network branch (52) of a DC voltage network (26) via a first energy converter (38) and a first switching unit (42), and the second winding (36) is electrically coupled to a second network branch (54) of the DC voltage network (26) via a second energy converter (40) and a second switching unit (44), and a further switching unit (48) arranged between the first network branch (52) and the second network branch (54) is open,
wherein the second rotating electric machine (28) is activated to convert the energy at least when the first rotating electric machine (16) is deactivated, wherein the first switching unit (42) is opened and the further switching unit (48) is closed.

6. Method according to Claim 5, **characterized in that** a period between the deactivation of the first rotating electric machine (16) and the activation of the second rotating electric machine (28) is smaller than a stroke period of a piston stroke of the two-stroke diesel engine (12).

## Revendications

1. Dispositif (10) d'alimentation en énergie pour disposer d'énergie électrique, comprenant :
- un moteur (12) diesel à deux temps pour disposer d'énergie électrique, qui a un vilebrequin (14) pour disposer de l'énergie mécanique, et
- une première machine (16) électrique tournante pour transformer l'énergie mécanique en énergie électrique, dans lequel la première machine (16) électrique tournante a un premier rotor (20), qui est monté dans un premier stator (18) et qui a un premier arbre (22) de rotor, dans lequel le premier arbre (22) de rotor est relié mécaniquement au vilebrequin (14), et dans lequel la première machine (16) électrique tournante a un premier enroulement (24) électrique, qui peut être relié électriquement à une première branche (52) d'un réseau (26) à tension continue, afin d'apporter l'énergie électrique au réseau (26) à tension continue,
- une deuxième machine (28) électrique tournante pour la transformation de l'énergie mécanique en énergie électrique, dans lequel la deuxième machine (28) électrique tournante a un deuxième rotor (32), qui est monté tournant dans un deuxième stator (30), et qui a un deuxième arbre (34) de rotor, dans lequel le deuxième arbre (34) de rotor est relié mécaniquement au vilebrequin (14), et dans lequel la deuxième machine (28) électrique tournante a un deuxième enroulement (36) électrique, qui peut être relié électriquement à une deuxième branche (54) du réseau (26) à tension continue, pour apporter l'énergie électrique au réseau (26) à tension continue,
- un premier et un deuxième convertisseurs (38, 40) d'énergie pur la liaison électrique du premier et du deuxième enroulements (24, 36) électrique au réseau (26) à tension continue, **caractérisé par**
- une première et une deuxième unités (42, 44) de coupure électrique pour la liaison électrique du premier et du deuxième enroulements (24, 36) électrique au réseau (26) à tension continue, par l'intermédiaire des premier et deuxième convertisseurs (38, 40) d'énergie,
- une autre unité (48) de coupure électrique pour la liaison électrique de la première branche (52) du réseau à la deuxième branche (54) du réseau et
- un dispositif (46) de commande pour la commande de la première et de la deuxième machines (16, 28) électriques tournantes et du au moins premier et deuxième convertisseurs (38, 40) d'énergie et de la au moins une autre unité (48) de coupure électrique et de la première et de la deuxième unités (42, 44) de coupure électrique, qui est conçu pour activer la deuxième machine (28) électrique tournante, au moins pour la transformation de l'énergie, lorsque la première machine (16) électrique tournante est désactivée, la première unité (42) de coupure électrique étant ouverte et l'autre unité (48) de coupure électrique étant fermée.

2. Dispositif d'alimentation en énergie suivant la revendication 1, **caractérisé en ce qu'**à la fois la première et la deuxième machines (16, 28) électriques tournantes sont constituées respectivement pour transformer en énergie électrique, indépendamment de respectivement l'autre des machines (16, 28) électriques tournantes, l'énergie mécanique mise à disposition au moins pendant une course du piston du moteur (12) diesel à deux temps.

3. Dispositif d'alimentation en énergie suivant l'une des revendications précédentes, **caractérisé en ce que** la première et/ou la deuxième machine (16, 28) électrique tournante est constituée sous la forme d'une machine synchrone polyphasée.

4. Dispositif d'alimentation en énergie suivant l'une des revendications précédentes, **caractérisé en ce que** le premier arbre (22) de rotor est relié mécaniquement à une première extrémité du vilebrequin (14) et le deuxième arbre (34) de rotor à une deuxième extrémité du vilebrequin (14) opposée à la première extrémité.

5. Procédé pour disposer d'énergie électrique au moyen d'un dispositif (10) d'alimentation en énergie, comprenant les stades :
- mise à disposition d'énergie mécanique au moyen d'un moteur (12) diesel à deux temps, l'énergie mécanique étant mise à disposition sur un vilebrequin (14) du moteur (12) diesel à deux temps,
- transformation de l'énergie mécanique en énergie électrique au moyen d'une première machine (16) électrique tournante, qui a un premier rotor (20), qui est monté tournant dans un premier stator (18) et dont le premier arbre (22) est relié mécaniquement au vilebrequin (14) et/ou transformation de l'énergie mécanique en énergie électrique au moyen d'une deuxième machine (28) électrique tournante, qui a un deuxième rotor (32), qui est monté tournant dans un deuxième stator (30), et dont le deuxième arbre (34) est relié mécaniquement au vilebrequin (14), dans lequel l'énergie électrique est mise à disposition au moyen d'un premier enroulement (24) de la première machine (16) électrique tournante et/ou au moyen d'un deuxième enroulement (36) de la deuxième machine (28) électrique tournante,
- apport de l'énergie électrique à un réseau (26) électrique à tension continue,
**caractérisé en ce qu'**a lieu une première liaison électrique du premier enroulement (24), par l'intermédiaire d'un premier convertisseur (38) d'énergie et d'une première unité (42) de coupure avec une première branche (52) d'un réseau (26) à tension continue, et a lieu une deuxième liaison électrique du deuxième enroulement (36), par l'intermédiaire d'un deuxième convertisseur (40) d'énergie et d'une deuxième unité (44) de coupure avec une deuxième branche (54) du réseau (26) à tension continue, et une autre unité (48) de coupure, montée entre la première branche (52) du réseau et la deuxième branche (54) du réseau, est ouverte, dans lequel on active la deuxième machine (28) électrique tournante au moins pour la transformation de l'énergie, lorsque la première machine (16) électrique tournante est désactivée, dans lequel on ouvre la première unité (42) de coupure et on ferme l'autre unité (48) de coupure.

6. Procédé suivant la revendication 5, **caractérisé en ce qu'**un laps de temps entre la désactivation de la première machine (16) électrique tournante et l'activation de la deuxième machine (28) électrique tournante est plus petit qu'une durée de course du piston du moteur (12) diesel à deux temps.
